# EUROPÄISCHE PATENTSCHRIFT

(11) **EP 1 088 841 B1**
(45) Veröffentlichungstag und Bekanntmachung des Hinweises auf die Patenterteilung: **06.04.2005**
(21) Anmeldenummer: 00119172.5
(22) Anmeldetag: 05.09.2000
(51) Int. Cl.: C08G 18/76, C08G 18/10, B01D 63/02, C08G 18/66

(54) **Polyurethan-Vergussmassen, insbesondere für medizinisch-technische Artikel**
Polyurethane embedding compositions, in particular for items for medical engineering
Masses à couler de polyuréthane, en particulier pour des articles médicaux

(30) Priorität: 01.10.1999 DE 19947192
(43) Veröffentlichungstag der Anmeldung: 04.04.2001
(73) Patentinhaber: BASF AKTIENGESELLSCHAFT, 67056 Ludwigshafen (DE)
(72) Erfinder: Horn, Peter, Dr., 69118 Heidelberg (DE); Scupin, Hansjoachim, 67069 Ludwigshafen (DE); Bartz, Thomas, Dr., 85259 Wiedenhausen (DE); Winkler, Jürgen, 01987 Schwarzheide (DE)

(56) Entgegenhaltungen:
- EP-A- 0 349 838
- EP-A- 0 393 545
- EP-A- 0 538 673
- US-A- 3 505 250

## Beschreibung

Gegenstand der Erfindung sind transparente, heißdampfsterisisierbare, nicht zytotoxische Polyurethan-Vergußmassen, Verfahren zu ihrer Herstellung und ihre Verwendung, insbesondere für medizinisch-technische Artikel.

Polyurethan- im folgenden als PU bezeichnet, -Vergußmassen sind seit langem bekannt und vielfach in der Literatur beschrieben. Die Verwendung von PU-Vergußmassen zur Herstellung von Formteilen für medizinisch-technische Geräte, insbesondere als Einbettwerkstoff für Hohlfasern in Dialysatoren, ist ebenfalls bekannt und beispielsweise in DE-OS 26 46 358, EP 0 305 387, EP 0 844 015 beschrieben. Durch die besondere Konstruktion der Dialysatoren, wie sie beispielsweise in EP 0 844 015 beschrieben wurden, ist es möglich geworden, den Volumenanteil der Hohlfasern im Dialysator um ca. 40 % zu steigern. Dies bleibt nicht ohne Konsequenzen auf die PU-Massen. Eine optimale Tränkung der Hohlfasern kann dadurch erreicht werden, daß die Viskosität der Einsatzkomponenten, insbesondere der Isocyanatkomponente, drastisch gesenkt wird. Prinzipiell ist es auch möglich, die Viskosität der Polyolmischung zu senken, der so erzielte Effekt wäre jedoch wesentlich geringer. Für den Einsatz als Vergußmasse in Hohlfaserdialysatoren ist es weiterhin wesentlich, daß die PU-Masse kein toxisches Potential besitzt. Aufgrund ihrer einfachen Handhabung ist der Einsatz von PU-Vergußmassen für diesen Zweck besonders vorteilhaft.

Aus US-A-3,962,094 sind katalysatorfreie PU-Vergußmassen bekannt, die aus Rizinusöl-4,4'MDI-, Toluylendiisocyanat- oder Phenylendiisocyanat-Prepolymeren mit endständigen NCO-Gruppen und einem Vernetzungsmittel hergestellt werden.

In DE-A-2 749 491 (US-A-4,170,559) werden PU-Vergußmassen beschrieben, die durch Umsetzung eines Prepolymeren, bestehend aus Rizinusöl und Polyoxypropylenglykol sowie 4,4'MDI mit einem Vernetzungsmittel hergestellt werden.

In DE-A-3 048 529 (US-A-4,332,927) werden Zweikomponenten-PU-Systeme, die im ausgehärteten Zustand nicht zytotoxisch sind und sich für medizinische Trennvorrichtungen eignen, beschrieben. Diese enthalten als Katalysator eine dicarboxylierte Dialkylzinnverbindung. Mit Zinn-Schwefel-Verbindungen katalysierte PU-Vergußmassen für Hohlfaserdialysatoren werden in DD-A-155 777 beschrieben. Die genannten PU-Vergußmassen können zu medizinischtechnischen Geräten oder Formteilen hierfür verarbeitet und vor ihrem Gebrauch mit Ethylenoxid und/oder mit Gammastrahlen sterilisiert werden. Diese Art der Sterilisierung ist jedoch nachteilig, da sowohl Reste von Ethylenoxid als auch Spaltprodukte der Behandlung mit Gammastrahlen bei den Patienten ein Gesundheitsrisiko bedeuten können. Ein weiterer Nachteil der beschriebenen Vergußmassen besteht darin, daß sie nicht mit jedem Fasertyp verarbeitet werden können. So können beispielsweise Cellulosefasern durch Rizinusöl enthaltende Vergußmassen geschädigt werden.

Physiologisch unbedenkliche PU-Formstoffe, insbesondere zum Einbetten von Hohlfasern in Dialysatoren, werden gemäß DD-A-251 565 hergestellt durch Umsetzung hochreaktiver, niedrigviskoser und lagerstabiler Mischprepolymerer, bestehend aus festen, hochreaktiven aromatischen Diisocyanaten und weniger reaktiven, flüssigen Diisocyanaten und Polyolen, mit Polyolen aus der Gruppe Rizinusöl und/oder dessen Umesterungsprodukten, hochreiner Polyester und Polyoxytetramethylenglykole. PU-Vergußmassen aus einem Isocyanatendgruppen aufweisenden PU-Prepolymeren und einer N,N,N',N'-Tetrakis(2-hydroxypropyl)ethylendiamin enthaltenden Polyolmischung sind Gegenstand von US-A-4 224 164. Nach Angaben der US-A-4 742 112 finden zur Herstellung von PU-Vergußmassen für elektrische Geräte als Polyolkomponente Mischungen aus 10 bis 60 Gew.-% eines Ricinolsäureesters und 90 bis 40 Gew.-% eines C₂bis C₆-Kohlenwasserstoffpolymeren mit mindestens einer Hydroxylgruppe Verwendung.

Bei der Verarbeitung der üblichen PU-Vergußmassensysteme treten außerdem vielfach Schwierigkeiten während des Produktionsablaufs auf. Die Vergußmassen lassen sich zwar unmittelbar nach dem Verguß und innerhalb eines Zeitraums von ungefähr 30 Minuten danach schneiden; sie härten jedoch sehr rasch nach, so daß die Formkörper, vorzugsweise Dialysefilter, bereits nach 24 Stunden nicht mehr geschnitten werden können. Dieses nachteilige Verhalten führt insbesondere bei Produktionsstörungen und an Arbeitsenden zu Produkteinbußen.

Ein weiterer Mangel der PU-Vergußmassen des Standes der Technik besteht auch darin, daß die Menge an Feinstaub, welcher beim Schneiden der Dialysatoren entsteht, hoch ist. Dies führt zu einem Verstopfen der Hohlfasern, welche zumeist aus mikroporösen Hohlfasern, wie Polysulfon, Polyethersulfon, thermostabilen Thermoplasten bestehen. Verstopfte Filter verhindern die Blutzufuhr und verhindern eine konstante Durchlaufgeschwindigkeit Blut/Dialyseflüssigkeit im Dialysator und sind daher zu vermeiden.

Finden zur Herstellung der PU-Vergußmassen PU-Formulierungen Verwendung, die als Aufbaukomponenten primäre, sekundäre und/oder tertiäre Aminogruppen und reaktive Wasserstoffatome gebunden enthalten, so sind die erhaltenen Vergußmassen instabil gegen eine Sterilisation mit Peressigsäure.

Zur Überwindung der genannten Nachteile werden in EP-A-393 545 transparente, heißdampfsterilisierbare, im wesentlichen kompakte PU-Vergußmassen beschrieben, die unter Verwendung von bei Raumtemperatur flüssigen, modifizierten Diphenylmethandiisocyanaten, die mit einem trifunktionellen Polyoxypropylenpolyol,modifiziert wurden, herstellbar sind. Gemäß EP-A-413 265 werden die modifizierten MDI erhalten durch Umsetzung einer Mischung aus 2,4'- und 4,4'-MDI mit speziellen, mindestens tetrafunktionellen Polyetherpolyolen. Die aus diesen Aufbaukomponenten hergestellten PU-Vergußmassen besitzen eine erhöhte Temperaturbeständigkeit und eine verbesserte Hydrolysebeständigkeit, es kann jedoch zu Haftungsproblemen zwischen den PU-Vergußmassen und den Gehäusematerialien des Dialysators, insbesondere beim Einsatz von Polycarbonaten, kommen.

Um diesen Mangel zu beheben, wurde in EP-A-538 673 vorgeschlagen, spezielle Polyetherpolyole zu verwenden, die einen Gehalt an Kaliumionen von 150 bis 1200 ppm aufweisen. Damit konnten die Haftungsprobleme zwar überwunden werden, nachteilig an den in EP-A-538 673 beschriebenen Vergußmassen ist jedoch, daß die Viskosität der verwendeten Isocyanatkomponente für viele Anwendungen zu hoch ist. Insbesondere bei Dialysatoren , die einen hohen Anteil an Hohlfasern enthalten, können dadurch Tränkschwierigkeiten auftreten. Dies führt zu einem erhöhten Ausschuß in der Produktion.

Aufgabe der Erfindung war es somit, heißdampfsterilisierbare, nicht cytotoxische Polyurethan-Vergußmassen zu entwickeln, die eine gute Verarbeitung, insbesondere eine gute Tränkung der Hohlfasern, ermöglichen, deren Einsatzkomponenten niederviskos sind und die sich nach dem Härten problemlos, insbesondere ohne Ausbildung von Feinstaub, schneiden lassen.

Weiterhin sollte die Aufbaukomponenten der PU-Vergußmassen nur geringe Mengen, vorzugsweise kein Rizinusöl enthalten, da Rizinusöl in seiner Qualität schwankend und mitunter schwierig zu beschaffen ist. Unter geringen Mengen werden hierbei Mengen von bis zu 4 Gew.-Teilen, bezogen auf das Gewicht der Polyurethan-Ausgangskomponenten, verstanden.

Die Aufgabe konnte überraschenderweise gelöst werden, indem die zur Herstellung der Vergußmassen eingesetzte Isocyanatkomponente eine Viskosität von maximal 1500 mPa.s bei 25°C, gemessen mit einem Haake-Viskosimeter VT 500, Typ 001-5583, Meßsystem MV 1, Hersteller Firma Haake, aufweist und deren Aufbaukomponenten mindestens eine organische Carbonsäure und mindestens einen Polyetheralkohol mit einem Gehalt an Alkaliionen im Bereich zwischen 40 und 1200 ppm enthalten.

Gegenstand der Erfindung sind demzufolge transparente, heißdampfsterilisierbare, nicht zytotoxische Polyurethan-Vergußmassen, die herstellbar sind durch Umsetzung von
a) Polyisocyanaten mit
b) Verbindungen mit mindestens zwei mit Isocyanatgruppen reaktiven Wasserstoffatomen in Gegenwart von
c) Katalysatoren,
dadurch gekennzeichnet, daß die Polyisocyanate a) eine Viskosität von maximal 1500 mPa.s, gemessen mit einem Haake-Viskosimeter VT 500 bei 25°C, aufweisen, die Komponente b) mindestens einen Polyetheralkohol mit einem Gehalt an Alkaliionen im Bereich zwischen 40 und 1200 ppm enthält und die Umsetzung in Gegenwart von d) mindestens einer organischen Carbonsäure durchgeführt wird.

Als modifizierte Polyisocyanate a) werden insbesondere Isocyanatgruppen enthaltende Umsetzungsprodukte von Isomeren des Diphenylmethandiisocyanats (MDI) mit mindestens einer Verbindung mit mindestens zwei mit Isocyanatgruppen reaktiven Wasserstoffatomen eingesetzt. Diese Verbindungen werden als Isocyanat-Prepolymere oder auch kurz als Prepolymere bezeichnet.

Die Herstellung der Isocyanat-Prepolymeren erfolgt durch Umsetzung von MDI mit speziellen Verbindungen mit mindestens zwei mit Isocyanatgruppen reaktiven Wasserstoffatomen, auf die weiter unten näher eingegangen wird.

Vorzugsweise weisen die Polyisocyanate a) einen NCO-Gehalt im Bereich von 20 bis 32 Gew.-% und eine Viskosität bei 25°C von 200 bis 1500 mPa.s, gemessen mit einem Haake-Viskosimeter VT 500, auf. Die genannten Kennwerte beziehen sich auf die Mischung aller zur Umsetzung verwendeten Polyisocyanate.

Als modifizierte MDI besonders bewährt haben sich in Urethangruppen gebunden enthaltende NCO-Prepolymere mit einem NCO-Gehalt von 24 bis 15 Gew.-%, vorzugsweise von 22 bis 17 Gew.-%, die hergestellt werden durch Umsetzung von, bezogen auf das Gesamtgewicht des Prepolymeren, mindesten 85 Gew.-%, vorzugsweise 90 bis 96 Gew.-% eines NCO-gruppenhaltigen Prepolymeren mit einem NCO-Gehalt von 29 bis 21 Gew.-%, vorzugsweise von 26 bis 22 Gew.-%, das seinerseits hergestellt wird durch Umsetzung von 4,4'-MDI mit Dipropylenglykol oder mindestens einem Polyoxyproylenglykol mit einer Hydroxyzahl bis 400 mgKOH/g, vorzugsweise von 50 bis 250 oder einer Mischung aus Dipropylenglykol und mindestens einem Polyoxypropylenglykol mit einer Hydroxyzahl bis 400 mgKOH/g mit maximal 5 Gew.-%, vorzugsweise 0,5 bis 4 Gew.-% Rizinusöl oder maximal 15 Gew.-% eines mit Pentarythrit, Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylen-polyoxyethylen- und Polyoxyethylen-, polyoxypropylen-polyole. Die zur Herstellung der Komponente a) eingesetzten Prepolymere werden häufig als Quasiprepolymere bezeichnet. Sie werden in der Technik häufig als Starter für höherviskose Prepolymere eingesetzt.

Gemeinsam mit oder an Stelle der beschriebenen Prepolymere können andere Isocyanate mit maximal 5 Gew.-%, vorzugsweise 0,5 bis 4 Gew.-% Rizinusöl oder maximal 15 Gew.-% eines mit Pentarythrit, Glycerin, Trimethylolpropan gestarteten Polyoxyalkylen-polyols mit einer Hydroxylzahl von 90 bis 200 mgKOH/g und einem Alkaligehalt von kleiner als 10 ppm aus der Gruppe der Polyoxypropylen-, Polyoxypropylen-polyoxyethylen- und Polyoxyethylen-, polyoxypropylen-polyole umgesetzt werden. Insbesondere eingesetzt werden Isomere des MDI; vorzugsweise reines 4,4'-MDI oder Gemische aus 4,4*'*-MDI und 2,4*'*-MDI. Entscheidend ist, daß die Viskosität der so hergestellten Komponente a) im Bereich zwischen 200 und 1500 mPa.s, gemessen mit einem Haake-Viskosimeter VT 500, aufweisen.

b) Als Verbindungen mit mindestens zwei mit Isocyanatgruppen reaktiven Wasserstoffatomen werden vorzugsweise Polyetherpolyole mit einer theoretischen Funktionalität von 2 bis 6 und einer Hydroxyzahl im Bereich von 140 bis 175, vorzugsweise von 150 bis 160 mgKOH/g verwendet. Derartige Polyole werden vorzugsweise nach bekannten Verfahren durch Umsetzung von H-funktionalen Startsubstanzen mit niederen Alkylenoxiden, insbesondere Ethylenoxid, Propylenoxid und/oder Butylenoxid, vorzugsweise Propylenoxid, hergestellt.

Insbesondere kommen solche Polyetherole zum Einsatz, bei denen als Startsubstanzen Diole, wie Ethylenglykol, Dipropylenglykol, Propandiol-1,2, oder höherfunktionelle Alkohole, wie Glycerin, Trimethylolpropan, Pentaerythrit oder Dipentaerythrit verwendet werden. Eine bevorzugt eingesetzte Startsubstanz zur Herstellung von Polyetheralkoholen, die für das erfindungsgemäße Verfahren einsetzbar sind, ist Pentaerythrit.

Die Startsubstanzen können einzeln oder im Gemisch untereinander zum Einsatz kommen. Im Gemisch mit den genannten Polyetherolen können auch andere Polyetherole eingesetzt werden. Hierbei kommen vorzugsweise 2- bis 6-funktionelle Polyetherole sowie hochfunktionelle Polyetheralkohole, wie sie insbesondere zur Herstellung von Polyurethan-Hartschaumstoffen eingesetzt werden, mit Hydroxylzahlen vorzugsweise im Bereich zwischen 20 und 500 mgKOH/g, in Betracht.

Als Katalysatoren zur Herstellung der Polyole, welche zur Herstellung der erfindungsgemäßen PU-Vergußmasse verwendet werden können, eignen sich insbesondere Kaliumhydroxid, Cäsiumhydroxid sowie die Multimetallcyanidverbindungen, sogenannte DMC-Katalysatoren. Letztere haben den Vorteil, daß bei ihrer Verwendung sehr hochmolekulare Polyetheralkohole mit einem geringen Gehalt an ungesättigten Bestandteilen hergestellt werden können. Die Reaktivität der Polyetheralkohole kann dadurch erhöht werden, daß bei Polyetheralkoholen, welche ganz oder überwiegend mit Propy-Ienoxid hergestellt werden, am Kettenende noch bis zu 20 Gew.-% Ethylenoxid aufpfropft werden.

Bei allen für das erfindungsgemäße Verfahren eingesetzten Polyolen sollte jedoch aus toxischen Gründen der Einsatz von Bortrifluorid-Ether bzw. Bortrifluorid/Isopropanol als Katalysator vermieden werden.

Als besonders vorteilhaft hat sich der Einsatz eines Diols mit Dipropylenglykol als Starter erwiesen, an das Propylenoxid angelagert wurde. Die Hydroxylzahl des Diols liegt dabei vorzugsweise im Bereich von 50 bis 60 mgKOH/g. Die genannten Polyole werden in der Regel in der Komponente b) eingesetzt, sie können jedoch auch zur Herstellung des als Isocyanatkomponente a) verwendeten Prepolymers eingesetzt werden. Die Polyolkomponente enthält vorzugsweise als Hauptbestandteil ein Polyol mit einer theoretischen Funktionalität von 2 bis 6 und einer Hydroxyzahl von 150 bis 165 mgKOH/g. Die beste Haftung am Gehäusematerial des Dialysators wird mit Polyolen der Hydroxyzahl 150 bis 165 mgKOH/g erzielt. Dies gilt insbesondere für Dialysatoren, deren Gehäuse aus Polycarbonat auf Basis Bisphenol A besteht. Um die Temperaturbeständigkeit und die Haftung der Vergußmasse zu verbessern, ist ein Polyol auf Basis von Pentaerythrit und Propylenoxid mit einer Hydroxylzahl im Bereich zwischen 145 und 165 mg KOH/g bevorzugt. Die Haftung zu Polycarbonat wird nicht beeinträchtigt, wenn z.B. Polyole mit Hydroxylzahlen von größer 200 mgKOH/g eingesetzt werden, limitiert ist jedoch die Hydroxylzahlahl nach oben durch die Gefahr einer Kernverbrennung der PU-Vergußmasse.

Erfindungsgemäß werden als Verbindungen mit mindestens zwei reaktiven Wasserstoffatomen b) weiterhin Polyetherpolyole mit einem im Vergleich zu handelsüblichen Produkten sehr hohen Gehalt an Alkaliionen verwendet, die als Vernetzer wirken. Diese Produkte sind insbesondere Polyetherpolyole oder deren Mischungen mit einer mittleren Funktionalität von 3 bis 8, vorzugsweise von 3 bis 6, einer Hydroxyzahl von 200 bis 1000 mgKOH/g, vorzugsweise 230 bis 970 mgKOH/g, und einem Gehalt an Alkaliionen, vorzugsweise von Kaliumionen, von 40 bis 1200 ppm, vorzugsweise von 100 bis 1000 ppm und insbesondere von 400 bis 600 ppm.

Als Polyether-polyole mit Alkaliionengehalt von 40 bis 1200 ppm können die an sich bekannten Polyetheralkohole mit einer mittleren Funktionalität von 3 bis 8 und einer Hydroxyzahl von 200 bis 1000 verwendet werden mit der Maßgabe, daß die Polyetheralkohole direkt mit dem erforderlichen Alkaliionengehalt hergestellt werden oder vorzugsweise durch eine geeignete Methode der Alkaliionengehalt von handelsüblichen Polyetheralkoholen, die üblicherweise eine Alkaliionengehalt von kleiner 10 ppm besitzen, erhöht wird. Zu diesem Zwecke können die Polyetheralkohole mit wäßrigem Alkalihydroxid, vorzugsweise einer wäßrigen Kaliumhydroxidlösung, oder alkoholischen Alkalialkoholatlösungen, vorzugsweise alkoholischen Kaliumalkoholatlösungen, in den erforderlichen Mengen bei Raumtemperatur oder erhöhten Temperaturen, z.B. bei 20 bis 120°C behandelt werden. Danach wird das zugesetzte und gebildete Wasser bzw. der Alkohol bei einer Temperatur im Bereich von 70 bis 110°C, gegebenenfalls unter vermindertem Druck, z.B. von 0,01 bis 1 mbar, abdestilliert.

Als Polyetheralkohole mit erhöhten Gehalt an Alkaliionen bewährt haben sich z.B. mit Trimethylolpropan gestartete Polyoxyethylen-polyole mit einer Hydroxyzahl im Bereich von 632 bis 970 und einem Kaliumionengehalt im Bereich von 150 bis 600 ppm und mit Glycerin oder Trimethylolpropan oder einer einer Mischung aus Glycerin und Trimethylolpropan gestartete Polyoxypropylenpolyole mit einer Hydroxylzahl im Bereich von 210 bis 480 und einem Kaliumionengehalt im Bereich von 450 bis 600 ppm. Als alkalireiche Polyetheralkohole eignen sich ferner z.B. Polyoxypropylenpolyole mit einer mittleren Funktionalität von 4 bis 8, vorzugsweise von 4 bis 6 und einer Hydroxyzahl von 230 bis 500 mgKOH/g, vorzugsweise von 250 bis 380 mgKOH/g, die erhalten werden unter Verwendung von Sucrose oder vorzugsweise Sorbit oder Mischungen aus Sucrose und Sorbit als Startermoleküle, wobei als Costarter zusätzlich Wasser, Propylenglykol, Glycerin oder Mischungen aus mindestens zwei der genannten Costarter mitverwendet werden können, mit der Maßgabe, daß die Polyether-polyole einen Alkalüonengehalt, vorzugsweise Kaliumionengehalt, von 40 bis 1200 ppm, vorzugsweise 100 bis 700 ppm besitzen. In Betracht kommen ferner Polyoxypropylen- und/oder Polyoxyethylen-polyole mit einem Alkaliionengehalt von 150 bis 800 ppm und einer Hydroxyzahl von 450 bis 750, die erhalten werden können durch Umsetzung von Pentaerythrit oder einer Mischung aus Pentaerythrit und Glycerin und/oder Trimethylolpropan, zweckmäßigerweise in einem Molverhältnis von Penaterythrit zu Glycerin und/oder Trimethylolpropan von 1:1, mit 1,2-Propylenoxid oder Ethylenoxid. Als alkalireiche Polyether-polyole verwendbar sind auch Polyoxypropylen-polyoxyethylen-polyole, die z.B. erhalten werden durch Polyaddition von 1,2-Propylenoxid und Ethylenoxid in einem Molverhältnis von 1:1 bis 1:8, vorzugsweise von 1:1 bis 1:3 an Glycerin, Trimethylpropan oder eine Mischung aus Glycerin und Trimethylolpropan als Startermoleküle, mit einer Hydroxyzahl von 350 bis 950, vorzugsweise von 380 bis 600 und einem Alkaliionengehalt, vorzugsweise Kaliumionengehalt, von 50 bis 800 ppm, vorzugsweise von 100 bis 600 ppm, oder durch Polyaddition von 1,2-Propylenoxid und Ethylenoxid in einem Molverhältnis von 1:1 bis 1:8, vorzugsweise von 1:1 bis 1:3 an Sucrose oder vorzugsweise Sorbit oder Mischungen aus Sucrose und Sorbit als Startermoleküle, mit einer Hydroxyzahl von 200 bis 500, vorzugsweise von 230 bis 300 und einem Alkaliionengehalt, vorzugsweise Kaliumionengehalt von 50 bis 800 ppm, vorzugsweise von 100 bis 600 ppm. Die beispielhaft genanten Polyetherpolyole können einzeln oder in Form von Mischungen verwendet werden.

Die vorzugsweise verwendeten alkalireichen Polyetherpolyole besitzen eine Funktionalität von 2 bis 8 und vorzugsweise eine Hydroxylzahl von 50 bis 970 mgKOH/g, einen Alkaligehalt von 40 bis 1200 ppm. Derartige Polyetheralkohole werden beispielsweise in EP-A-538 673 beschrieben.

Die alkalireichen Poyetheralkohole gewährleisten eine rasche Durchhärtung der PU-Vergußmasse und führen somit zu einer Produktionssteigerung. Gleichzeitig verhindern sie eine unerwünschte Nachhärtung der PU-Vergußmassen, beispielsweise bei betriebsbedingten Abstellungen der Produktion.

Die alkalireichen Polyetheralkohole werden vorzugsweise in einer Menge von 2 bis 10 Gew.-%, bezogen auf das Gewicht der Komponente b), eingesetzt.

Zu den Verbindungen mit mindestens zwei mit Isocyanatgruppen reaktiven Wasserstoffatmen gehören auch die sogenannten Vernetzungsmittel, die zur Modifizierung der mechanischen Eigenschaften gegebenenfalls eingesetzt werden können. Sofern Vernetzungsmittel zur Modifizierung der mechanischen Eigenschaften umgesetzt werden, finden zweckmäßigerweise Hydroxylgruppen enthaltende Vernetzungsmittel mit einer Funktionalität von 3 bis 8, vorzugsweise 3 bis 4 Verwendung. Beispielhaft genannt seien 3- und mehrwertige Alkohole, wie z.B. Glycerin, Trimethylolpropan, Pentaerythrit, 2,2,6,6-Tetrahydroxymethyl-4-heptandiol-1,7(Di-penterythrit), Tripentaerythrit, Sorbit, Saccharose, Sorbitan und mit diesen Alkoholen gestartete niedermolekulare Polyoxypropylen-, Polyoxyethylen-, Polyoxypropylen-polyoxyethylen-polypolyole mit Molekulargewichten bis 600 g/mol, Sorbitantrioleat. Die genannten Vernetzer weisen zumeist Alkaligehalte von maximal 10 ppm auf.

Zusätzlich oder an Stelle der eingangs beschriebenen Polyetheralkohole können gegebenenfalls auch Polyesterole verwendet werden. Geeignete Polyesterole sind beispielsweise in EP-A-393 545, Spalte 5 und 6 beschrieben. Bevorzugt sind kurzkettige Polyesterole mit Hydroxylzahlen im Bereich von 150 bis 180 mgKOH/g. Geeignet sind auch Polyole, die sowohl Ether- als auch Estergruppen im Molekül enthalten.

Gegebenenfalls ist es erforderlich, insbesondere difunktionelle Kettenverlängerer einzusetzen. Die Kettenverlängerer können, falls erforderlich, sowohl mit den Verbindungen mit mindestens zwei mit Isocyanatgruppen reaktiven Wasserstoffatomen eingesetzt oder bei der Herstellung der Prepolymere eingesetzt werden. Beispielhaft für Kettenverlängerer seien genannt:

Niedermolekulare difunktionelle Alkohole, Ester- oder Ethergruppen als Brückenglieder gebunden enthaltende Glykole Beispielhaft seien genannt: Alkandiole mit 2 bis 10 Kohlenstoffatomen, vorzugsweise 2 bis 6 Kohlenstoffatomen, wie z.B. Ethandiol, Propandiol-1,2 oder -1,3, 2,2-Dimethyl-propandiol, 1,2 Propandiol, Butandiol-1,4, -1,3 oder -2,3, Pentandiol-1,5 oder -2,5, Hexandiol-1,6, 2,2,5-Trimethyl- oder 2,2,5,5- Tetramethyl-hexandiol 1,6; Cycloalkandiole und Alkylcycloalkandiole mit 6 bis 19 Kohlenstoffatomen, vorzugsweise 6 bis 15 Kohlenstoffatomen, wie z.B. 1,4-Dihydroxycyclohexan. 1-Hydroxymethyl-4-hydroxycyclohexan, 1,4-Bis-(hydroxymethyl)-cyclohexan, 4,4'- Dihydroxy-dicyclohexyl-methan oder -propan-2,2, Esterbrücken gebunden enthaltende Glykole, wie z.B. 3-Hydroxy-2,2-dimethylpropionsäure-2-hydroxyethylester, Terephthalsäure,bis-ethylenglykol oder -butandiol-1,4 und Etherbrücken gebunden enthaltende Glykole mit Molekulargewichten bis 378 wie z.B. Hydroxyalkylenether des Hydrochinons, beispielsweise 1,4-Di-(b-hydroxyethyl)-hydrochinon, Oxyalkylen-glykol mit 4 bis 8 Kohlenstoffatomen, wie z.B. Diethylen-, Dipropylen-, Dibutylenglykol, Tripropylenglykol sowie die entsprechenden höhermolekularen Oligomeren davon, wie z.B. Dioxyethylen-, Trioxyethylen-, Dioxypropylen-, Trioxypropylen-, Dioxybutylen-, Trioxybutylen- oder Tetraoxybutylen-glykol. Die Dihydroxyverbindungen aus der Gruppe der Alkan-, Cycloalkan-, Alkylcycloalkyl-diole und der entsprechenden Ester- oder Etherbrücken gebunden enthaltenden Glykole können einzeln oder als Mischungen eingesetzt werden.

Die Kettenverlängerer können deshalb erforderlich sein, um insbesondere bei kälteren Außentemperaturen die Reaktion zum Anspringen zu bringen. Die Menge der Kettenverlängerer beträgt, bezogen auf das Gewicht der PU-Vergußmasse, 0,01 bis 10 Gew.-%.

Die Umsetzung der Polyisocyanate mit den Verbindungen mit mindestens zwei mit Isocyanatgruppen reaktiven Wasserstoffatomen erfolgt vorzugsweise in Anwesenheit von Urethanisierungskatalysatoren c). Entscheidend für ihren Einsatz ist, daß sie keine zytotoxische Wirkung haben. Geeignete Katalysatoren werden beispielsweise in EP-A-538 673 beschrieben. Ganz besonders gut geeignet ist eine Mischung aus Di-n-octylzinn-bis-(2-ethyl-hexylthioglykolat) und Mono-n-octyl-zinn-tris-(2-ethylhexylthioglykolat). n-Octyl-Gruppen aus Zinn sind im Gegensatz zu n-Butyl-Gruppen nicht toxisch.

Die erfindungsgemäß verwendeten organischen Carbonsäuren d) werden dem Reaktionsgemisch vorzugsweise in einer Menge von 0,01 bis 5 Gew.-Teilen, bezogen auf das Gewicht der PU-Vergußmasse, zugegeben. Die Zugabe der Carbonsäuren erfolgt vorzugsweise zu den Verbindungen mit mindestens zwei mit Isocyanatgruppen reaktiven Wasserstoffatomen b).

Als organische Carbonsäuren sind prinzipiell alle organischen Carbonsäuren, die nicht zytotoxisch wirken können, verwendbar. Bevorzugt sind aliphatische und/oder aromatische Mono-/und Dicarbonsäuren. Besonders bevorzugt eingesetzt werden Fettsäuren. Derartige Säuren sind im "Lehrbuch der organischen Chemie" Carl R. Noller, Springer-Verlag, Berlin, Göttingen, Heidelberg, Jahrgang 1960, Seiten 187 bis 188, beschrieben. Besonders bevorzugt eingesetzt werden Carbonsäuren, ausgewählt aus der Gruppe, enthaltend Benzoesäuren, Rizinolsäure, Ölsäure, Linolsäure und Linolensäure. Besonders vorteilhaft ist der Einsatz der genannten Säuren dann, wenn in der Polyolkomponente Polyetherole zum Einsatz kommen, welche einen Gehalt von Kaliumionen von ca. 50 bis 1500 ppm besitzen.

Die Toxizität der Einsatzprodukte und der PU-Vergußmassen wurde bestimmt Guideline ISO 7405 1997 (E), "Dentistry-Preclinical Evaluation of Biocompatibility of Medical Devices used in Dentistry-Test Methods", USP 23, "Biological Renetivity Tests, in vitro, Agar Diffusion Test", pp. 1967-1969, 1995, "Detection of the homolytic and Protein Denaturing Potential with HUMAN Erythrocytes (According to PAPE).

Die Erniedrigung der Viskosität der Isocyanatkomponente wirkte sich nicht nachteilig auf die Qualität der Vergußmasse aus. Überraschend war auch, daß die Vergußmassen keine Toxizität zeigen, daß sie heißdampfsterilisierbar sind, eine gute Haftung zu den als Gehäusematerialien der Dialysatoren verwendeten thermoplastischen Kunststoffe aufweisen, keine Wechselwirkung mit den mikroporösen Hohlfasern zeigen, und die PU-Vergußmasse rasch durchhärtet, so daß sie nach dem Verguß bereits nach 3 Stunden geschnitten werden kann. Außerdem härtet die PU-Masse nach Erreichen der Endhärte nicht weiter nach, so daß die Vergußmasse auch nach einer Lagerung, wie sie beispielsweise bei Betriebsstörungen oder zum Arbeitsende auftreten kann, problemlos geschnitten werden kann.

Ein wesentlicher Vorteil der Erfindung besteht auch darin, daß die Menge an Feinstaub, welcher beim Schneiden der Dialysatoren entsteht, außerordentlich gering ist. Dies ist vorteilhaft, um ein Verstopfen der Hohlfasern, welche aus mikroporösen Hohlfasern, wie Cuprophan, Polysulfon, Polyethersulfon, thermostabilen Thermoplasten bestehen, zu verhindern. Verstopfte Filter unterbrechen die Blutzufuhr und verhindern somit eine konstante Durchlaufgeschwindigkeit Blut/Dialyseflüssigkeit im Dialysator.

Die Erfindung soll an den nachstehenden Beispielen näher erläutert werden.

### Beispiele

### Beispiel 1

### a) Herstellung des modifizierten Diphenylmethan-Diisocyanats

78,5 Gew.-Teile eines modifizierten Diphenylmethan-diisocyanats mit einem NCO-Gehalt von 23,0 Gew.-% (Lupranat® MP102 der BASF Aktiengesellschaft), welches hergestellt wurde durch Umsetzung von 4,4'-MDI mit einer Mischung aus Dipropylen-glykol und einem Polyoxypropylen-glykol mit einer Hydroxylzahl 250 und einem Kaliuminonengehalt von 3 ppm im Gewichtsverhältnis von 1 : 0,6 und 13,85 Gew.-Teile einer Mischung aus 4,4*'*-MDI und 2,4*'*-MDI in einem Gewichtsverhältnis von 1:1 wurden auf 60°C erwärmt. Unter Rühren wurden zu diesem Gemisch während 1 Stunde 7,65 Gew.-Teile eines Polyetherols mit einer Hydroxylzahl von 160 mg KOH/g, hergestellt durch Umsetzung von Trimethylolpropan und Propylenoxid, zugegeben. Nach beendeter Umsetzung wurde das Reaktionsgemisch auf Raumtemperatur abgekühlt. Das entstandene Prepolymer hatte eine Viskosität von 1239 mPa.s bei 25°C, gemessen mit einem Viscotester VT500, Typ 001-5583, Maßsystem SV1, Hersteller Firma Haake. Der NCO-Gehalt des Prepolymeren betrug 22,0 Gew.-%.

### b) Herstellung der PU-Masse

94,75 Gew.-Teile eines Polyetherols mit einer Hydroxylzahl von 159 mgKOH/g, hergestellt durch Umsetzung von Trimethylolpropan und Ethylenoxid, 0,2 Gew.-Teile Rizinolsäure, 0,05 Gew.-Teile eines Zinnkatalysators Tinstab® OTS 16 der Firma Akros Chemicals GmbH u. Co. KG und 5 Gew.-Teile eines Polyetherols mit einer Hydroxyzahl von 932 mgKOH/g und einem Alkaligehalt von 510 ppm Kalium, hergestellt durch Addition von Trimethylpropan und Ethylenoxid, wurden zu einer Polyolkomponente vermischt.

100 Gew.-Teile dieser Polyolkomponente wurden mit 70,6 Gew.-Teilen des modifizierten Diphenylmethan-Diisocyanats aus Beispiel 1a zur Umsetzung gebracht. Die Temperatur betrug ca. 25°C. Dabei entstand ein Formkörper. Die Temperatur stieg bei der Umsetzung auf 86 °C an. Das Reaktionssystem hatte eine Gelzeit von 350 Sekunden. Die PU-Masse hatte eine Shore A Härte von 96 und eine Shore D-Härte von 54. Die erhaltene PU-Masse war vollkommen homogen. Der Feinstaub beim Schneiden des Formkörpers betrug 0,1 mg.

### Beispiel 2

### a) Herstellung des modifizierten MDI

4 Gewichtsteile Gew.-Teile einer Mischung aus 4,4'-MDI und 2,4'-MDI in einem Gewichtsverhältnis von 1:1 und 14,5 Gew.-Teile4,4'-MDI wurden auf 60°C unter Rühren erwärmt eine Mischung aus 74 Gew.-Teilen eines Polypropylenglykols mit einem Molekulargewicht von 2000, 2,5 Gew.-Teilen Tripropylenglykol und 5 Gew.-Teilen Dipropylenglykol innerhalb von 30 Minuten zugetropft. Nach beendeter Umsetzung wurde das Reaktionsgemisch auf Raumtemperatur abgekühlt. Das entstandene Prepolymer hatte eine Viskosität von 724 mPa.s bei 25°C, gemessen mit einem Viscotester VP 50, Typ 001-5583, Maßsystem SVD, Hersteller Firma Haake. Der NCO-Gehalt des Prepolymeren betrug 21,8 Gew.-%.

### b) Herstellung der PU-Masse

Es wurde die Polyolkomponente aus Beispiel 1b) verwendet.

100 Gew.-Teile dieser Polyolkomponente wurden mit 71,3 Gew.-Teilen des modifizierten Diphenylmethandiisocyanats aus Beispiel 2a zur Umsetzung gebracht. Die Temperatur betrug ca. 25°C. Das Reaktionssystem hatte eine Gelzeit von 311 Sekunden: Die Temperatur stieg bei der Umsetzung auf 86 °C an Die PU-Masse hatte eine Shore A Härte von 93 und eine Shore D Härte von 44. Die erhaltene PU-Masse war vollkommen transparent und homogen. Der Feinstaub beim Schneiden des Formkörpers betrug 0,1 mg.

### Beispiel 3

### a) modifizierte MDI gemäß Beispiel 2a

### b) Herstellung der PU-Masse

Die Polyolkomponente bestand aus einer Mischung aus 93,7 Gew.-Teilen eines Poletherpolyols aus Pentaerythrit und Propylenoxid mit einer Hydroxylzahl von 161 mg KOH/g und 4 Gew.-Teilen eines Polyetherpolyols mit einer Hydroxyzahl von 556 mgKOH/g mit einem Alkaligehalt von 563 ppm Kalium, hergestellt durch Addition von 80 Gew.-% Propylenoxid und 20 Gew.-% Ethylenoxid an Pentaerythrit. Anschließend wurden 0,2 Gew.-Teile einer destillierten Rizinolsäure, 2 Gew.-Teile Ethylenglykol sowie 0,05 Gew.Teile des Katalysators Tinstab® OTS16 zugegeben.

100 Gew.-Teile dieser Polyolkomponente wurden mit 80,4 Gew.-Teilen des modifizierten Diphenylmethandiisocyanats aus Beispiel 2a zur Umsetzung gebracht. Die Temperatur betrug ca. 25°C. Das Reaktionssystem hatte eine Gelzeit von 270 Sekunden. Die PU-Masse hatte eine Shore A Härte von 96,5 und eine Shore D Härte von 56. Die erhaltene PU-Masse war vollkommen transparent und homogen. Der Feinstaub beim Schneiden des Formkörpers betrug 0,15 mg.

## Patentansprüche

1. Verfahren zur Herstellung von transparenten, heißdampfsterilisierbaren, nicht zytotoxischen Polyurethan-Vergußmassen, herstellbar durch Umsetzung von
a) Polyisocyanaten mit
b) Verbindungen mit mindestens zwei mit Isocyanatgruppen reaktiven Wasserstoffatomen in Gegenwart von
c) Katalysatoren
**dadurch gekennzeichnet, daß** die Polyisocyanate a) eine Viskosität von maximal 1500 mPa.s, gemessen mit einem Haake-Viskosimeter VT 500 bei 25°C, aufweisen, die Komponente b) mindestens einen Polyetheralkohol mit einem Gehalt an Alkaliionen im Bereich zwischen 40 und 1200 ppm enthält und die Umsetzung in Gegenwart von d) mindestens einer organischen Carbonsäure durchgeführt wird.

2. Verfahren nach Anspruch 1, **dadurch gekennzeichnet, daß** als Polyisocyanate a) Isocyanatgruppen enthaltende Prepolymere aus der Umsetzung von Polyisocyanaten mit mindestens einer Verbindung mit mindestens zwei mit Isocyanatgruppen reaktiven Wasserstoffatomen eingesetzt werden.

3. Verfahren nach Anspruch 1, **dadurch gekennzeichnet, daß** die Polyisocyanate a) zusammen einen NCO-Gehalt im Bereich von 15 bis 32 Gew.-% aufweisen.

4. Verfahren nach Anspruch 1, **dadurch gekennzeichnet, daß** als Verbindungen mit mindestens zwei mit Isocyanatgruppen reaktiven Wasserstoffatomen Polyetherpolyole mit einer theoretischen Funktionalität von 2 bis 6 und einer Hydroxylzahl im Bereich von 140 bis 175 mgKOH/g eingesetzt werden.

5. Verfahren nach Anspruch 1, **dadurch gekennzeichnet, daß** die Polyetheralkohole mit einem Gehalt an Alkoaliionen von 40 bis 1200 ppm eine mittlere Funktionalität von 3 bis 8 und eine Hydroxylzahl von 200 bis 1000 mgKOH/g aufweisen.

6. Verfahren nach Anspruch 1, **dadurch gekennzeichnet, daß** die Polyetheralkohole mit einem Gehalt an Alkoaliionen von 40 bis 1200 ppm in einer Menge von 2 bis 10 Gew.-%, bezogen auf das Gewicht der Komponente b), eingesetzt werden.

7. Verfahren nach Anspruch 1, **dadurch gekennzeichnet, daß** als organische Carbonsäuren aromatische Mono-/und Dicarbonsäuren eingesetzt werden.

8. Verfahren nach Anspruch 1, **dadurch gekennzeichnet, daß** die organischen Carbonsäuren ausgewählt sind aus der Gruppe, enthaltend Benzoesäuren, Rizinolsäure, Ölsäure, Linolsäure und Linolensäure.

9. Verfahren nach Anspruch 1, **dadurch gekennzeichnet, daß** die organischen Carbonsäuren in einer Menge von 0,01 bis 5 Gew.-Teilen, bezogen auf das Gewicht der PU-Vergußmasse, eingesetzt werden.

10. Polyurethan-Vergußmassen, herstellbar nach einem der Ansprüche 1 bis 9.

11. Verwendung von Polyurethan-Vergußmassen, herstellbar nach Anspruch 10, für die Herstellung von medizinisch- technische Artikeln.

12. Verwendung von Polyurethan-Vergußmassen, herstellbar nach Anspruch 10, für die Herstellung von Hohlfaser-Dialysatoren.

## Claims

1. A process for preparing transparent, non-cytotoxic polyurethane embedding compositions which can be sterilized by superheated steam and can be prepared by reacting
a) polyisocyanates with
b) compounds having at least two hydrogen atoms reactive toward isocyanate groups, in the presence of
c) catalysts,
which comprises using polyisocyanates a) which have a viscosity of not more than 1500 mPa.s, measured at 25°C using a Haake VT 500 viscometer, and using as component b) at least one polyether alcohol with a content of from 40 to 1200 ppm of alkali metal ions, and carrying out the reaction in the presence of d) at least one organic carboxylic acid.

2. A process as claimed in claim 1, wherein the polyisocyanates a) used comprise prepolymers which contain isocyanate groups and are products of the reaction of polyisocyanates with at least one compound having at least two hydrogen atoms reactive toward isocyanate groups.

3. A process as claimed in claim 1, wherein the polyisocyanates a) taken together have an NCO content of from 15 to 32% by weight.

4. A process as claimed in claim 1, wherein the compounds having at least two hydrogen atoms reactive toward isocyanate groups comprise polyether polyols having a theoretical functionality of from 2 to 6 and a hydroxyl number of from 140 to 175 mg KOH/g.

5. A process as claimed in claim 1, wherein the polyether alcohols have a content of from 40 to 1200 ppm of alkali metal ions, an average functionality of from 3 to 8 and a hydroxyl number of from 200 to 1000 mg KOH/g.

6. A process as claimed in claim 1, wherein the amount used of the polyether alcohols with a content of from 40 to 1200 ppm of alkali metal ions is from 2 to 10% by weight, based on the weight of component b).

7. A process as claimed in claim 1, wherein the organic carboxylic acids used are aromatic mono- and dicarboxylic acids.

8. A process as claimed in claim 1, wherein the organic carboxylic acids have been selected from the group consisting of benzoic acids, ricinoleic acid, oleic acid, linoleic acid and linolenic acid.

9. A process as claimed in claim 1, wherein the amount used of the organic carboxylic acids is from 0.01 to 5 parts by weight, based on the weight of the PU embedding composition.

10. A polyurethane embedding composition which can be prepared as claimed in any one of claims 1 to 9.

11. The use of polyurethane embedding compositions which can be prepared as claimed in claim 10, for producing items for medical engineering.

12. The use of polyurethane embedding compositions which can be prepared as claimed in claim 10, for producing hollow-fiber dialyzers.

## Revendications

1. Procédé de préparation de masses à couler de polyuréthanne transparentes, non cytotoxiques et stérilisables à la vapeur surchauffée, à préparer par mise en réaction de
a) polyisocyanates avec
b) des composés comportant au moins deux atomes d'hydrogène réagissant avec des radicaux isocyanate en présence de
c) catalyseurs
**caractérisé en ce que** les polyisocyanates a) présentent une viscosité de 1500 mPa.s maximum, mesurée avec un viscosimètre de Haake VT 500 à 25°C, le composant b) contient au moins un alcool de polyéther avec un taux d'ions alcalins de l'ordre de 40 à 1200 ppm et la mise en réaction est effectuée en présence de d) au moins un acide carboxylique organique.

2. Procédé selon la revendication 1, **caractérisé en ce que** les polyisocyanates a) utilisés sont des prépolymères contenant des radicaux isocyanate provenant de la mise en réaction de polyisocyanates avec au moins un composé comportant au moins deux atomes d'hydrogène réagissant avec des radicaux isocyanate.

3. Procédé selon la revendication 1, **caractérisé en ce que** les polyisocyanates a) présentent ensemble un taux de NCO de l'ordre de 15 à 32 % en poids.

4. Procédé selon la revendication 1, **caractérisé en ce que** des polyétherpolyols avec une fonctionnalité théorique de 2 à 6 et un indice d'hydroxyle de l'ordre de 140 à 175 mg de KOH/g sont utilisés comme composés avec au moins deux atomes d'hydrogène réagissant avec des radicaux isocyanate.

5. Procédé selon la revendication 1, **caractérisé en ce que** les alcools de polyéther avec un taux d'ions alcalins de 40 à 1200 ppm présentent une fonctionnalité moyenne de 3 à 8 et un indice d'hydroxyle de 200 à 1000 mg de KOH/g.

6. Procédé selon la revendication 1, **caractérisé en ce que** les alcools de polyéther avec un taux d'ions alcalins de 40 à 1200 ppm sont utilisés dans une quantité de 2 à 10% en poids par rapport au poids des composants b).

7. Procédé selon la revendication 1, **caractérisé en ce que** des acides mono et dicarboxyliques aromatiques sont utilisés comme acides carboxyliques organiques.

8. Procédé selon la revendication 1, **caractérisé en ce que** les acides carboxyliques organiques sont sélectionnés dans le groupe contenant les acides benzoïques, l'acide ricinoléique, l'acide oléique, l'acide linoléique et l'acide linolénique.

9. Procédé selon la revendication 1, **caractérisé en ce que** les acides carboxyliques organiques sont utilisés dans une quantité de 0,01 à 5 parties en poids par rapport au poids de la masse à couler de PU.

10. Masses à couler de polyuréthanne préparer selon l'une des revendications 1 à 9.

11. Utilisation de masses à couler de polyuréthanne à préparer selon la revendication 10, pour la préparation d'articles médicotechniques.

12. Utilisation de masses à couler de polyuréthanne à préparer selon la revendication 10, pour la fabrication de dialyseurs à fibres creuses.
